(19) Europäisches Patentamt
European Patent Office
Office européen des brevets

(11) **EP 3 024 623 B1**

(12) **FASCICULE DE BREVET EUROPEEN**

(45) Date de publication et mention de la délivrance du brevet:
**22.03.2017 Bulletin 2017/12**

(51) Int Cl.:
***B25J 9/16*** *(2006.01)*     ***H02P 6/08*** *(2016.01)*

(21) Numéro de dépôt: **14737239.5**

(22) Date de dépôt: **08.07.2014**

(86) Numéro de dépôt international:
**PCT/EP2014/064632**

(87) Numéro de publication internationale:
**WO 2015/010897 (29.01.2015 Gazette 2015/04)**

(54) **PROCÉDÉ DE COMMANDE D'UN SEGMENT DE BRAS DE COMANIPULATEUR**

VERFAHREN ZUR STEUERUNG EINES SEGMENTS EINES ARMS EINES COMANIPULATORS

METHOD FOR CONTROLLING A SEGMENT OF AN ARM OF A COMANIPULATOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.07.2013 FR 1357392**

(43) Date de publication de la demande:
**01.06.2016 Bulletin 2016/22**

(73) Titulaire: **Commissariat à l'Énergie Atomique et aux Énergies Alternatives**
**75015 Paris (FR)**

(72) Inventeur: **ABROUG, Neil**
**F-38000 Grenoble (FR)**

(74) Mandataire: **Parzy, Benjamin Alain et al**
**Cabinet Boettcher**
**16, rue Médéric**
**75017 Paris (FR)**

(56) Documents cités:
**FR-A1- 2 852 265      FR-A1- 2 852 373**
**JP-A- H05 297 907      JP-A- 2005 349 555**
**JP-A- 2012 203 589      US-A1- 2011 190 934**

## Description

L'invention est relative à un procédé de commande d'un segment de bras de comanipulateur, comme un bras maître, un cobot ou un exosquelette.

## ARRIERE-PLAN TECHNOLOGIQUE DE L'INVENTION

Dans les robots comanipulant avec un opérateur humain (par exemple un bras-maître, un cobot ou un exosquelette), on utilise des actionneurs pour manoeuvrer les segments mobiles, comme par exemple un vérin à câble équipé d'un moteur électrique. Ces moteurs sont en général de bons générateurs de vitesse, mais de moins bons générateurs de couple. Il s'avère donc souvent nécessaire d'utiliser un réducteur permettant d'amplifier le couple délivré, au prix d'une diminution de la vitesse. Ces réducteurs peuvent atteindre des rapports d'amplification de l'ordre de 100. On sait que du point de vue de l'opérateur, l'inertie du moteur est multipliée par le carré du rapport d'amplification, de sorte que si même le moteur choisi est très performant, son inertie peut être ressentie par l'utilisateur. Il convient donc de faire en sorte de compenser les efforts d'inertie du segment de sorte que celui-ci soit le plus transparent possible pour l'utilisateur.

Il est connu de mesurer ou d'estimer l'accélération du segment concerné pour estimer l'effort d'inertie subi par ce segment, afin de compenser ce dernier. L'accélération est un signal difficile à acquérir. Il est connu d'estimer l'accélération à partir d'un signal de position auquel on applique une double dérivation. Le signal ainsi obtenu est particulièrement irrégulier et nécessite un filtrage puissant qui réduit les performances d'une commande chargée de compenser l'effort d'inertie.

Il est en outre connu d'utiliser une loi de commande de type H∞ pour optimiser la compensation des vibrations dans un procédé de commande d'un actionneur d'un segment articulé, comme le montre le document JP H05 297907 A.

## OBJET DE L'INVENTION

L'invention a pour objet de proposer un procédé de commande permettant de compenser l'inertie de l'actionneur.

## PRESENTATION DE L'INVENTION

En vue de la réalisation de ce but, on propose un procédé de commande d'un actionneur d'un segment articulé comportant les étapes de :

- Estimer une inertie $J$ du segment et un frottement visqueux articulaire minimal $f$ ;
- Estimer ou mesurer une vitesse de déplacement $\dot{X}$ du segment et une déformée interne $\Delta X$ de l'actionneur;

- Synthétiser une loi de commande de type $H_\infty$ générant un couple de commande à partir de ces estimations ou mesures et répondant à un objectif de performance portant sur une fonction de transfert

$$G(s) = \frac{\ddot{X}}{F}$$

entre une accélération $\ddot{X}$ du segment et une force externe $F$ subie par le segment : $\|G(s)\|$

$$W_s(s)\|_\infty \leq 1 \text{ avec } W_s(s) = \left(\frac{s+\varepsilon}{Js+f}\right)^{-1}, \quad \varepsilon \text{ étant}$$

un artefact mathématique et s la variable de Laplace;
- Commander l'actionneur du segment articulé selon la loi de commande ainsi synthétisée.

La fonction seuil $W_s$ correspond à un système infiniment rigide, sans déformation interne. Ainsi l'accomplissement de l'objectif de performance permet de gommer les effets de la flexibilité inhérente à l'actionnement du segment (due par exemple à l'élasticité du câble si l'actionneur est un vérin à câbles).

Selon un aspect particulier de l'invention, la synthèse de la commande est effectuée sous au moins l'une des contraintes suivantes :

- une contrainte portant sur le courant d'alimentation (ou couple de commande) du moteur qui ne doit pas dépasser un seuil donné pour tous les efforts admissibles ;
- une contrainte portant sur les positions des pôles de la loi de commande qui doivent être tous situés en deçà d'une fréquence seuil inférieure à la fréquence de Nyquist ;
- une contrainte de passivité selon laquelle la fonction de transfert Force/vitesse doit être réelle positive.

## BREVE DESCRIPTION DES DESSINS

L'invention sera mieux comprise à la lumière de la description qui suit d'un mode particulier non limitatif de mise en oeuvre de l'invention, aux références aux figures des dessins annexés parmi lesquels :

- La figure 1 est une vue schématique d'un segment de bras de comanipulateur actionné au moyen d'un actionneur à câble ;
- La figure 2 est un graphique montrant le diagramme de Bode du segment et la fonction de seuil ;
- La figure 3 est un schéma bloc de l'asservissement mis en oeuvre au moyen de l'invention.

## DESCRIPTION DETAIILLEE D'UN MODE DE MISE EN OEUVRE DE L'INVENTION

En référence aux figures, l'invention est ici appliquée à la commande d'un segment articulé d'un bras de robot utilisable en comanipulation. Le robot comporte un actionneur 1 déplaçant un câble 2 enroulée autour d'une poulie de renvoi 3 et d'une poulie articulaire 4 menant un segment 5 articulé selon un axe d'articulation 6. L'actionneur comporte ici un moteur 7 associé à un réducteur 8 qui entraîne l'écrou d'une transmission à billes 9 dont la vis creuse est attelée au câble 2 qui passe à l'intérieur de la vis.

Selon l'invention, on commence par estimer l'inertie $J$ du segment articulé 5 autour de l'axe d'articulation 6. Différentes méthodes sont connues pour estimer une telle inertie. On peut par exemple, à partir de la définition du segment, rapporter les inerties propres de tous les éléments composant le segment à une inertie autour de l'axe d'articulation 6 et sommer toutes ces inerties.

Puis on estime un frottement visqueux à vitesse constante. Il s'agit de mesurer le couple $f$ résistant au déplacement du segment lorsque l'actionneur 1 déplace ce dernier à vitesse constante $\dot{\theta}$.

Enfin, on estime une raideur $k$ de la transmission entre le moteur 7 et la poulie articulaire 4 (essentiellement déterminée par la raideur du câble 2). Pour ceci, on trace le couple exercé sur la poulie articulaire alors que celle-ci est bloquée en fonction de la position angulaire de l'arbre du moteur 7. On en déduit une raideur $k$.

Le procédé de l'invention comporte l'étape de synthétiser une loi de commande de l'actionneur 1 telle que le segment articulé 5 se comporte comme si la transmission entre le moteur 7 et la poulie articulaire 7 était infiniment rigide, ce qui revient à faire disparaître pour l'utilisateur tout effet parasite dû à la souplesse de la transmission.

Pour cela, on mesure la fonction de transfert $G(s) = \dfrac{\ddot{X}}{F}$, où $\ddot{X}$ est l'accélération du segment articulé 5, et F est l'effort externe agissant sur le segment articulé 5 (par exemple, le poids d'une charge que le segment soulève). La variable s est la variable de Laplace. Selon un aspect important de l'invention, l'accélération n'est pas mesurée directement, mais recomposée au moyen d'un modèle. A cet effet, on commence par mesurer ou estimer une vitesse $\dot{X}$ de déplacement du segment, ainsi qu'une déformée interne $\Delta X$. Cette déformée peut pas exemple être estimée en mesurant la position $X$ du segment et en estimant à partir de la position angulaire du moteur d'actionnement une position $\overline{X}$ qui serait celle du segment si la transmission était infiniment rigide. La différence $\Delta X = X - \overline{X}$ correspond à la déformée interne. La multiplication de la déformée interne $\Delta X$ par le raideur $k$ estimée auparavant donne une estimation de la contrainte interne. Il est dès lors possible d'estimer la fonction de transfert $G(s)$.

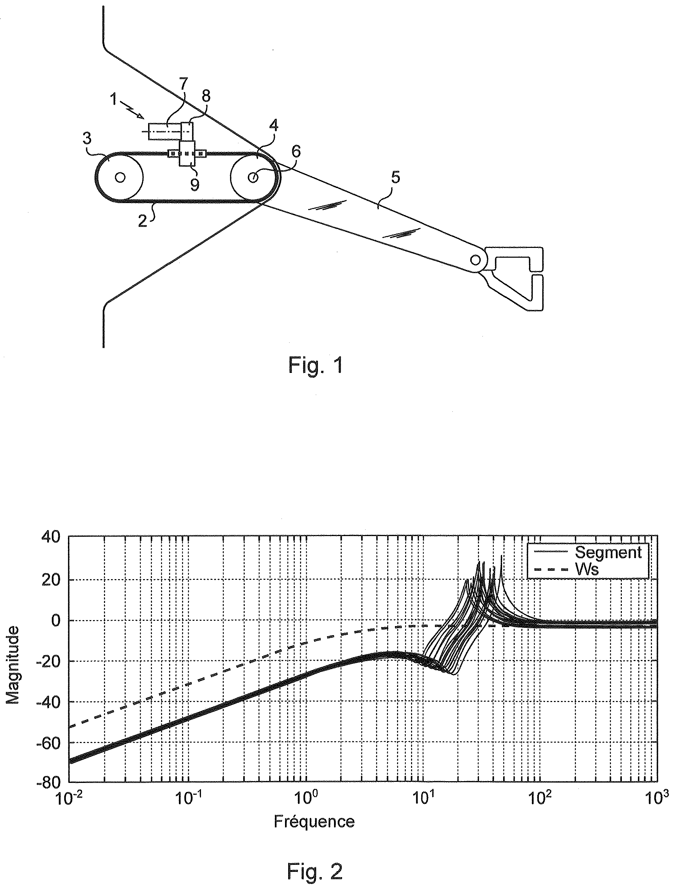

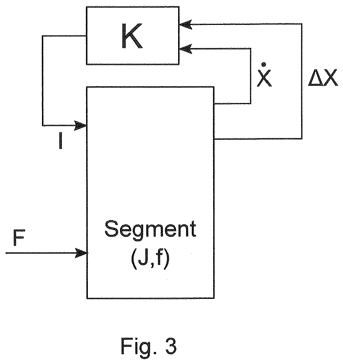

En utilisant les outils classiques de la synthèse $H_\infty$, on détermine une loi de commande K dont les entrées sont la vitesse $\dot{X}$ et la déformée interne $\Delta X$ et dont la sortie est un couple de commande, ici représenté par un courant (ou couple) de commande I, comme cela est schématisé à la figure 3. La synthèse répond l'objectif suivant : $\|G(s)\| \, W_s\|_\infty \le 1$ avec $W_s = \left(\dfrac{s+\varepsilon}{Js+f}\right)^{-1}$, $\varepsilon$ étant un artefact mathématique et $s$ la variable de Laplace. C'est-à-dire que la caractéristique dans un diagramme de Bode de la fonction de transfert $G(s)$ est en dessous de la caractéristique de la fonction seuil $W_S(s)$. Le diagramme de Bode de la figure 2 illustre en traits fins le comportement du segment articulé en l'absence de commande selon l'invention, et en traits épais la fonction seuil $W_s(s)$. L'un des buts du procédé de l'invention est de gommer les pics dus à la flexibilité de la transmission, pour obtenir un comportement du bras proche de la fonction seuil $W_s(s)$.

Par ailleurs, et selon un aspect particulier de l'invention, on impose au moins l'une des contraintes suivantes :

- une contrainte portant le courant d'alimentation (ou couple de commande) du moteur qui ne doit pas dépasser un seuil donné pour tous les efforts admissibles. Cette contrainte est remplie en imposant que $\left\|\dfrac{I}{F}\right\|_\infty \le S$, où $I$ est l'intensité du courant alimentant le moteur de l'actionneur (ou le couple demandé au moteur), et S un seuil déterminé ;

- une contrainte portant sur les positions des pôles de la loi de commande qui doivent être tous situés en deçà d'une fréquence seuil $F_s$ inférieure ou égale à la fréquence de Nyquist ;

- une contrainte de passivité selon laquelle la fonction de transfert Force/vitesse $H = \dfrac{F}{\dot{X}}$ doit être réelle positive. On rappelle qu'une fonction de transfert H est réelle positive si $\left\|\dfrac{\alpha - H}{\alpha + H}\right\|_\infty < 1$, ou $\alpha$ est un nombre réel strictement positif.

Puis une fois la loi de commande synthétisée comme il vient d'être dit, on utilise cette loi de commande pour commander l'actionneur.

L'invention n'est pas limitée à ce qui vient d'être décrit, mais englobe au contraire toute variante entrant dans le cadre défini par les revendications. En particulier, les caractéristiques inertielles (position, vitesse accélération) du segment de bras peuvent concerner aussi bien des déplacements linéaires que des déplacements angulaires.

**Revendications**

1. Procédé de commande d'un actionneur (1) d'un segment articulé (5) comportant les étapes de :

- Estimer une inertie *J* du segment et un frottement visqueux articulaire minimal *f* ;
- Estimer ou mesurer une vitesse de déplacement $\dot{X}$ du segment et une déformée interne $\Delta X$ de l'actionneur;
- Synthétiser une loi de commande de type $H_\infty$ générant un couple de commande à partir de ces estimations ou mesures et répondant à un objectif de performance portant sur une fonction de transfert $G(s) = \dfrac{\ddot{X}}{F}$ entre une accélération $\ddot{X}$ du segment et une force externe *F* subie par le segment : $\|G(s) \; W_s(s)\|_\infty \leq 1$ avec $W_s(s) = \left( \dfrac{s + \varepsilon}{Js + f} \right)^{-1}$, $\varepsilon$ étant un artefact mathématique et s la variable de Laplace;
- Commander l'actionneur du segment articulé selon la loi de commande ainsi synthétisée.

2.  Procédé de commande selon la revendication 1, dans lequel, la synthèse de la commande est effectuée sous au moins l'une des contraintes suivantes :

    - une contrainte portant le couple de commande du moteur qui ne doit pas dépasser un seuil donné pour tous les efforts admissibles ;
    - une contrainte portant sur les positions des pôles de la loi de commande qui doivent être tous situés en deçà d'une fréquence seuil inférieure ou égale à la fréquence de Nyquist ;
    - une contrainte de passivité selon laquelle la fonction de transfert Force/vitesse doit être réelle positive.

**Patentansprüche**

1.  Verfahren zur Steuerung eines Aktors (1) eines angelenkten Segments (5), umfassend die Schritte:

    - Schätzen einer Trägheit *J* des Segments und einer minimalen artikularen viskosen Reibung *f*;
    - Schätzen oder Messen einer Bewegungsgeschwindigkeit $\dot{X}$ des Segments und einer inneren Verformung $\Delta X$ des Aktors;

    - Synthetisieren eines Steuerungsgesetzes der Art $H_\infty$, das anhand dieser Schätzungen oder Messungen ein Steuermoment erzeugt und ein Leistungsziel erfüllt, das sich auf eine Übertragungsfunktion $G(s) = \dfrac{\ddot{X}}{F}$ zwischen einer Beschleunigung $\ddot{X}$ des Segments und einer äußeren Kraft *F* bezieht, die von dem Segment er-

fahren wird: $\|G(s)W_s(s)\|_\infty \leq 1$ mit $W_S(s) = \left( \dfrac{s + \varepsilon}{Js + f} \right)^{-1}$, wobei $\varepsilon$ ein mathematisches Artefakt und *s* die Laplace-Variable ist;
    - Steuern des Aktors des angelenkten Segments gemäß dem so synthetisierten Steuerungsgesetz.

2.  Verfahren zur Steuerung nach Anspruch 1, bei dem die Synthese der Steuerung unter mindestens einer der folgenden Beschränkungen erfolgt:

    - eine Beschränkung, die sich auf das Steuermoment des Motors bezieht, das für alle zulässigen Kräfte einen gegebenen Schwellwert nicht überschreiten darf;
    - eine Beschränkung, die sich auf die Positionen der Pole des Steuerungsgesetzes bezieht, die sich alle diesseits einer Grenzfrequenz befinden müssen, die kleiner oder gleich der Nyquist-Frequenz ist;
    - eine Passivitätsbeschränkung, gemäß der die Übertragungsfunktion Kraft/Geschwindigkeit reell positiv sein muss.

**Claims**

1.  A method for controlling an actuator (1) of an articulated segment (5) comprising the steps for:

    - Estimating an inertia *J* of the segment and a minimum articulation viscous friction *f*;
    - Estimating or measuring a speed of movement $\dot{X}$ of the segment and an internal deformation $\Delta X$ of the actuator;
    - Synthesizing a control law of the $H_\infty$ type generating a control torque based on these estimations or measurements and meeting a performance objective relating to a transfer function $G(s) = \dfrac{\ddot{X}}{F}$ between an acceleration $\ddot{X}$ of the segment and an external force *F* applied to the segment: $\|G(s)W_s(s)\|_\infty \leq 1$ with $W_s(s) = \left( \dfrac{s + \varepsilon}{Js + f} \right)^{-1}$, $\varepsilon$ being a mathematical artifact and s the Laplace variable;
    - Controlling the actuator of the articulated segment according to the control law thus synthesized.

2.  The control method as claimed in Claim 1, in which, the synthesis of the control is carried out under at least one of the following constraints:

- a constraint relating to the control torque of the motor which must not exceed a given threshold for all the admissible forces;
- a constraint relating to the positions of the poles of the control law which must all be situated below a threshold frequency lower than or equal to the Nyquist frequency;
- a passivity constraint according to which the force/speed transfer function must be a positive real number.

Fig. 1

Fig. 2

Fig. 3

**RÉFÉRENCES CITÉES DANS LA DESCRIPTION**

**Documents brevets cités dans la description**

- JP H05297907 A